# FASCICULE DE BREVET EUROPEEN

(11) **EP 3 108 139 B1**
(45) Date de publication et mention de la délivrance du brevet: **26.02.2025**
(21) Numéro de dépôt: 15704342.3
(22) Date de dépôt: 16.01.2015
(51) Int. Cl.: F02P 5/15, F02P 5/152

(54) **PROCÉDÉ DE DÉTERMINATION DU REMPLISSAGE EN AIR DE RÉFÉRENCE POUR LE CALCUL DE L'AVANCE À L'ALLUMAGE D'UN MOTEUR**
VERFAHREN ZUR BERECHNUNG DER REFERENZLUFTFÜLLUNG ZUR BERECHNUNG DES ZÜNDFORTSCHRITTS EINES MOTORS
METHOD FOR DETERMINING THE REFERENCE AIR FILLING FOR CALCULATING THE IGNITION ADVANCE OF AN ENGINE

(30) Priorité: 19.02.2014 FR 1451320
(43) Date de publication de la demande: 28.12.2016
(73) Titulaire: Stellantis Auto SAS, 78300 Poissy (FR)
(72) Inventeur: PARODI, Julien, F-06600 Antibes (FR); CHARRIER, Jean Louis, 44400 REZÉ (FR); GRALL, Sebastien, F-94000 Créteil (FR)
(74) Mandataire: PSIP
(86) Numéro de dépôt international: PCT/FR2015/050110
(87) Numéro de publication internationale: WO 2015/124837

(56) Documents cités:
- DE-A1- 10 043 106
- DE-A1- 19 902 203
- FR-A1- 2 991 002
- US-A- 5 517 968

## Description

La présente invention se rapporte au domaine des moteurs à combustion à allumage commandé. L'invention concerne plus particulièrement un procédé de détermination du remplissage en air de référence pour le calcul de l'avance à l'allumage d'un moteur à allumage commandé.

Dans un moteur à explosion à allumage commandé, le cliquetis est le phénomène résultant d'une résonance de l'explosion sur les parois de la chambre de combustion ou du piston. Par extension, le terme cliquetis désigne également le phénomène d'explosion spontanée (parfois dénommé « auto-allumage » ou « auto-inflammation ») engendrant la combustion, à contre-temps de l'étincelle de la bougie, d'une partie du mélange de carburant alimentant le moteur à allumage commandé.

Dans un moteur à combustion interne, le cliquetis est notamment source de gênes pour l'utilisateur, d'une dégradation précoce du moteur à allumage commandé et/ou d'une augmentation de la consommation de carburant.

Cependant, il est connu que pour éviter l'apparition de cliquetis, il est possible de faire varier la valeur de l'avance à l'allumage. Plus particulièrement, l'allumage de la bougie est retardé pour diminuer la compression du mélange présent dans la chambre de combustion lors de l'allumage de la bougie. Ainsi, différents procédés connus utilisant la variation de la valeur de l'avance à l'allumage sont utilisés pour lutter contre le phénomène de cliquetis dans un moteur à allumage commandé.

L'avance à l'allumage est aussi dépendante du remplissage en air du moteur durant la phase d'admission, autrement dit de la quantité d'air admis dans la chambre de combustion. Or, lors de phases de fonctionnement du moteur comportant de fortes variations de remplissage, typiquement lors des régimes transitoires du moteur, il est nécessaire d'adapter rapidement l'avance à l'allumage à ces variations de remplissage pour éviter l'apparition du cliquetis.

Il est connu par exemple du document FR2991002 un procédé de commande de la combustion d'un moteur à allumage commandé pour la prévention du cliquetis dans lequel on détermine une variation de la quantité d'air d'admission entre deux cycles de fonctionnement, on identifie un régime transitoire du moteur lorsque la variation de la quantité d'air d'admission déterminée est supérieure à une valeur de seuil et on détermine une avance à l'allumage de la bougie adaptée au régime transitoire identifié.

Cependant un tel procédé ne permet pas d'anticiper en cas de régime transitoire rapide du moteur une variation de la quantité d'air pour le cycle de fonctionnement à venir ni donc d'identifier avec précision le bon régime transitoire du cycle de fonctionnement à venir, ce qui fausse le calcul de l'avance à l'allumage.

Du document US5517968A1 il est connu de déterminer la quantité d'air d'admission sur la base d'une prédiction du remplissage en fonction de l'angle vilebrequin et la position de la pédale accélérateur afin de calculer l'avance à allumage.

Par conséquent, le problème à la base de l'invention est de déterminer avec précision la quantité d'air pour le cycle de fonctionnement à venir,

Pour résoudre ce problème, il est prévu selon l'invention un procédé de détermination du remplissage en air de référence pour le calcul de l'avance à l'allumage d'un moteur à allumage commandé selon un cycle de fonctionnement comportant une phase d'admission d'air dans le moteur dans lequel :
a1) on détermine la quantité d'air admise pendant le cycle de fonctionnement courant,
a2) on détermine la quantité d'air admise pendant le cycle de fonctionnement précédent le cycle de fonctionnement courant,
a3) on détermine une variation de la quantité d'air d'admission entre deux cycles de fonctionnement réalisés du moteur à allumage commandé, à partir de la différence des quantités d'air admises au cycle de fonctionnement courant et au cycle de fonctionnement précédent le cycle de fonctionnement courant,
b) on identifie un régime transitoire du moteur à allumage commandé lorsque cette variation de la quantité d'air d'admission est supérieure à une valeur seuil, caractérisé en ce que, lorsqu'un régime transitoire est identifié,
   c) on prédit une quantité d'air d'admission pour la phase d'admission d'air du cycle de fonctionnement immédiatement à venir, cette étape comprenant les étapes de :
   c.1) détermination de la quantité d'air admise pendant le cycle de fonctionnement courant,
   c.2) estimation d'une variation de la quantité d'air d'admission entre le cycle de fonctionnement courant et le cycle de fonctionnement immédiatement à venir,
   c.3) prédiction de la quantité d'air admise pour la phase d'admission d'air du cycle de fonctionnement à venir à partir de la valeur déterminée de la quantité d'air admise pendant le cycle de fonctionnement courant et la variation de la quantité d'air d'admission estimée,
d) on applique comme remplissage en air de référence pour le calcul de l'avance à l'allumage du cycle de fonctionnement immédiatement à venir la quantité d'air d'admission prédite,
   et lorsqu'un régime transitoire n'est pas identifié :
   - on applique comme remplissage en air de référence pour le calcul de l'avance à l'allumage du cycle de fonctionnement à venir la quantité d'air d'admission admise pendant le cycle de fonctionnement courant.

Grâce à cette prédiction du remplissage pour le prochain cycle moteur, on peut appliquer une avance à l'allumage correcte et éviter les cycles cliquetant.

De préférence, l'étape c.2) comprend les étapes de :
c.2.1) détermination d'une quantité d'air admise pendant le cycle de fonctionnement courant corrigée en fonction de paramètres de fonctionnement moteur,
c.2.2) estimation de la variation de la quantité d'air d'admission entre le cycle de fonctionnement courant et le cycle de fonctionnement à venir à partir de la quantité d'air admise corrigée et du régime moteur.

De préférence encore, à l'étape c.2.1) les paramètres de fonctionnement moteur comprennent: la pression atmosphérique, la température d'air d'admission, le rapport de vitesse engagé.

De préférence, tant qu'un régime transitoire est identifié :
- on calcule un temps de maintien,
et lorsque le régime transitoire n'est plus identifié :
- on fige le temps de maintien à sa dernière valeur,
- on applique comme remplissage en air de référence pour le calcul de l'avance à l'allumage du cycle de fonctionnement à venir, la quantité d'air d'admission estimée durant le temps de maintien figé.

De préférence encore, le temps de maintien est déterminé en fonction de la quantité d'air admise pendant le cycle de fonctionnement courant et du régime moteur.

L'invention a aussi pour objet une unité de commande du fonctionnement d'un moteur à allumage commandé conçue pour mettre en œuvre le procédé selon l'une quelconque des variantes précédemment décrites.

L'invention a encore pour objet un véhicule automobile comprenant un moteur à allumage commandé et une telle unité de commande du fonctionnement du moteur à allumage.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un module de détermination du remplissage en air de référence pour le calcul de l'avance à l'allumage.
- La figure 2 est une représentation schématique du module de prédiction du remplissage en air.
- La figure 3 est une représentation schématique du module de calcul d'un temps de maintien.

### Description détaillée

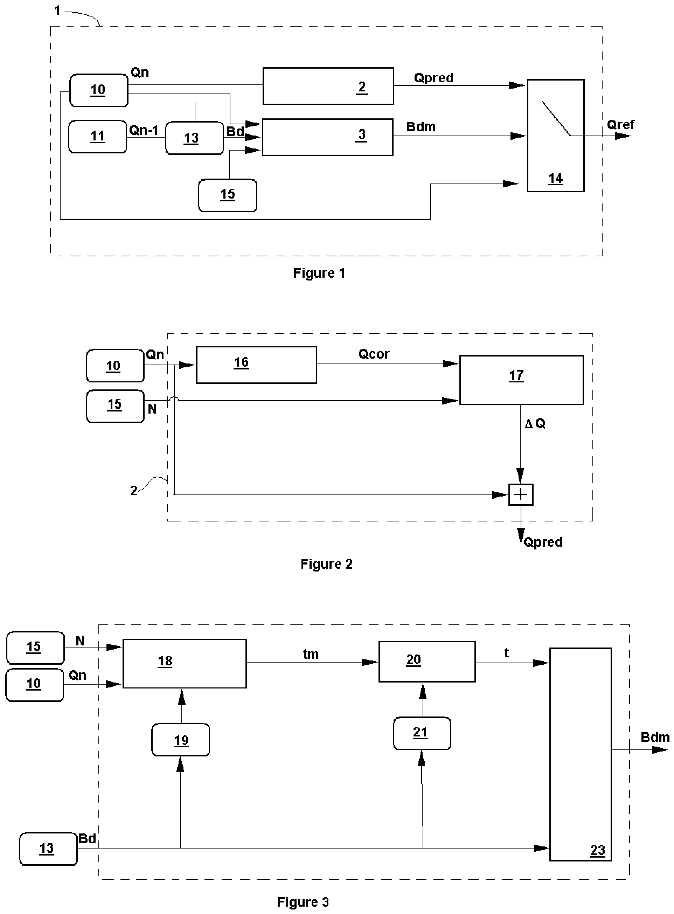

La figure 1 présente un mode de réalisation d'un module 1 de prédiction remplissage en air de référence pour le calcul de l'avance à l'allumage d'un moteur à allumage commandé.

Un moteur à allumage commandé dit à quatre temps, comprend typiquement quatre phases : une phase d'admission de l'air dans la chambre de combustion, une phase de compression, une phase de détente des gaz brûlés, et une phase d'échappement des gaz brûlés. La combustion est déclenchée durant la phase de compression à un moment du cycle de fonctionnement définit par l'avance à l'allumage. L'avance à l'allumage est aussi dépendante du remplissage en air du moteur durant la phase d'admission, autrement dit de la quantité d'air admis dans la chambre de combustion.

Le module 1 peut être intégré à une unité de commande du fonctionnement du moteur à allumage commandé, tel qu'un calculateur électronique, non représenté. Une telle unité de commande peut équiper un véhicule automobile comprenant un moteur à allumage commandé.

Le module 1 comprend un module 2 de prédiction du remplissage en air, dont plus de détails sont visibles à la figure 2 ainsi qu'un module 3 de calcul d'un temps de maintien, dont plus de détails sont visibles à la figure 3.

Conformément à l'invention, le module 1 permet de mettre en œuvre le procédé de détermination du remplissage en air de référence pour le calcul de l'avance à l'allumage suivant :
A l'étape 10, on détermine la quantité d'air, Qₙ, admise pendant le cycle de fonctionnement courant, autrement dit le remplissage en air pour le cycle de fonctionnement pour lequel le moteur est en train de produire du travail.

A l'étape 11, on détermine la quantité d'air Qₙ₋₁ admise pendant le cycle de fonctionnement précédent le cycle de fonctionnement courant,

A partir des valeurs des quantités d'air admises déterminées aux étapes 10 et 11 pour ces deux cycles de fonctionnement réalisés par le moteur à allumage commandé, on détermine à l'étape 13 une variation de la quantité d'air d'admission entre ces deux cycles de fonctionnement réalisés, à partir de la différence des quantités d'air, Qₙ et Qₙ₋₁ respectivement admises au cycle de fonctionnement courant et au cycle de fonctionnement précédent le cycle de fonctionnement courant. A l'étape 13 encore, on identifie un régime transitoire du moteur à allumage commandé lorsque la variation de la quantité d'air d'admission est supérieure à une valeur seuil. En pratique, cette valeur seuil de variation de quantité d'air d'admission peut être comprise entre 2,5% et 6% du remplissage maximum du moteur.

L'identification du régime transitoire peut être indiquée au moyen par exemple d'une variable booléenne qui peut prendre une première valeur, par exemple 1 lorsque le régime transitoire est identifié et une seconde valeur, par exemple 0, lorsque le régime transitoire n'est pas identifié.

Selon le principe de l'invention, lorsqu'un tel régime transitoire est identifié, on estime à partir du module 2 une quantité d'air d'admission prédite, Qpred, pour la phase d'admission d'air du cycle de fonctionnement immédiatement à venir et on retient, autrement dit on applique, à l'étape 14 comme remplissage en air de référence, Qref, pour le calcul de l'avance à l'allumage du cycle de fonctionnement à venir, la quantité d'air d'admission estimée, Qpred.

Dans le cas contraire, c'est-à-dire lorsqu'un régime transitoire n'est pas identifié, on retient, autrement dit on applique, comme remplissage en air de référence, Qref pour le calcul de l'avance à l'allumage du cycle de fonctionnement à venir, la quantité d'air d'admission admise Qn pendant le cycle de fonctionnement courant, déterminée à l'étape 10.

La figure 2 détaille le fonctionnement du module 2. Dans ce module 2, à l'étape 16, on détermine d'une quantité d'air admise pendant le cycle de fonctionnement courant corrigée, Qcor, en fonction de paramètres de fonctionnement moteur. De préférence, les paramètres de fonctionnement du moteur pris en compte pour la correction de la quantité d'air admise pendant le cycle de fonctionnement courant comprennent : la pression atmosphérique, la température d'air d'admission, le rapport de vitesse engagé. Cette correction peut être déterminée au moyen, d'une première cartographie qui établit la quantité d'air admise corrigée, Qcor en fonction des paramètres de fonctionnement moteur et de la quantité d'air admise pendant le cycle de fonctionnement courant, Qn.

A l'étape suivante 17, on estime la variation, ΔQ, de la quantité d'air d'admission entre le cycle de fonctionnement courant et le cycle de fonctionnement à venir, à partir de la quantité d'air admise corrigée, Qcor, déterminée à l'étape précédente 16 et du régime moteur, N, déterminé à l'étape 15. Cette variation de quantité d'air, ΔQ, peut être déterminée au moyen, d'une seconde cartographie qui établit la variation, ΔQ, de la quantité d'air d'admission entre le cycle de fonctionnement courant et le cycle de fonctionnement à venir en fonction de la quantité d'air admise corrigée, Qcor et du régime moteur, N. Le fait d'utiliser en cascade deux cartographies permet de de mieux gérer la puissance de calcul de l'unité de commande.

La quantité d'air admise pendant le cycle de fonctionnement courant, Qn et la variation, ΔQ, de la quantité d'air d'admission entre le cycle de fonctionnement courant et le cycle de fonctionnement à venir sont ensuite additionnées pour obtenir l'estimation de la quantité d'air d'admission, Qpred, pour la phase d'admission d'air du cycle de fonctionnement à venir.

La figure 3 détaille le fonctionnement du module 3. Dans ce module 3 de calcul d'un temps de maintien, il prévu, à l'étape 18, de déterminer le temps de maintien, tm, en fonction de la quantité d'air admise, Qₙ, pendant le cycle de fonctionnement courant déterminé à l'étape 10 et du régime moteur, N, déterminé à l'étape 15. Dans ce mode de réalisation, le temps de maintien est déterminé continument, autrement dit tant qu'un régime transitoire est identifié. Le temps de maintien, tm, peut être calculé par exemple à chaque cycle de fonctionnement. A cet effet, l'étape 19 active la détermination du temps de maintien, tm, de l'étape 18 tant que le régime transitoire est identifié.

Ainsi, par exemple, tant que le régime transitoire est identifié par une variable booléenne, Bd, prenant la valeur 1, l'étape 19 autorise le calcul du temps de maintien à l'étape 18. Dans le cas contraire si le régime transitoire n'est pas identifiée (la valeur de la variable booléenne étant alors 0), l'étape 19 n'autorise pas le calcul du temps de maintien à l'étape 18.

Dès que le régime transitoire n'est plus identifié, on fige le temps de maintien à la dernière valeur calculée. Dans ce cas, la variable booléenne étant passée à la valeur 0, l'étape 19 n'autorise plus de nouveau calcul du temps de maintien. A l'étape 21, la valeur de la variable booléenne est inversée ce qui active un compte à rebours 20 qui démarre sur la base du temps de maintien figé à sa dernière valeur. Tant que le temps restant t n'est pas épuisé, l'étape 23 maintien l'état de transitoire identifié, par exemple au moyen d'un booléen, Qbm, et de ce fait on retient comme remplissage en air de référence, Qref, pour le calcul de l'avance à l'allumage du cycle de fonctionnement à venir la quantité d'air d'admission estimée, Qpred, durant le temps de maintien figé.

Le remplissage de référence sera de nouveau le remplissage courant une fois le temps de maintien épuisé. Le fait de prolonger durant un temps de maintien déterminé l'usage de la quantité d'air d'admission estimée, Qpred, comme remplissage en air de référence, fait office d'hystérésis et permet d'éviter des phénomènes de dit de « bagotement », c'est-à-dire d'instabilité de fonctionnement du moteur.

Le procédé de l'invention permet d'améliorer la précision des avance à l'allumage en transitoire et donc d'augmenter le rendement du moteur durant ces phases et donc de réduire les émissions de gaz carbonique. En effet, avec le procédé de l'invention, lors des transitoires aucun cliquetis ne sera détecté et aucun retrait d'avance néfaste à l'agrément et au rendement moteur ne sera fait. Le procédé de l'invention ne requiert pas de capteur supplémentaire ni de modification structurelle du calculateur.

Ce procédé peut être mis en œuvre par un calculateur d'un dispositif de commande du fonctionnement d'un moteur à allumage commandé. Un tel dispositif peut équiper tout véhicule automobile comprenant un moteur à allumage commandé.

L'invention permet, grâce à des donnés simple disponible dans le contrôle moteur d'effectuer une prédiction de la charge en air précise pour chaque cycle et quel que soit les conditions d'utilisation du moteur. Cela permet de ne plus faire de retrait d'avance forfaitaire lors de régime transitoire rapide car nous pouvons calculer l'avance à l'allumage correcte à appliquer et il n'y a donc plus de risque de cliquetis.

## Revendications

1. Procédé de détermination du remplissage en air de référence pour le calcul de l'avance à l'allumage d'un moteur à allumage commandé fonctionnant selon un cycle de fonctionnement comportant une phase d'admission d'air dans le moteur dans lequel :
a1) on détermine (10) la quantité d'air admise (Qₙ) pendant le cycle de fonctionnement courant,
a2) on détermine (11) la quantité d'air admise (Qₙ₋₁) pendant le cycle de fonctionnement précédent le cycle de fonctionnement courant,
a3) on détermine (13) une variation de la quantité d'air d'admission entre deux cycles de fonctionnement (Qₙ, Qₙ₋₁) réalisés du moteur à allumage commandé, à partir de la différence des quantités d'air admises au cycle de fonctionnement courant et au cycle de fonctionnement précédent le cycle de fonctionnement courant (Qₙ, Qₙ₋₁),
b) on identifie (13) un régime transitoire du moteur à allumage commandé lorsque cette variation de quantité d'air d'admission est supérieure à une valeur seuil, **caractérisé en ce que**, lorsqu'un régime transitoire est identifié,
c) on prédit une quantité d'air d'admission (Qpred) pour la phase d'admission d'air du cycle de fonctionnement immédiatement à venir, cette étape comprenant les étapes de :
c.1) détermination de la quantité d'air admise (Qₙ) pendant le cycle de fonctionnement courant,
c.2) estimation d'une variation (ΔQ) de la quantité d'air d'admission entre le cycle de fonctionnement courant et le cycle de fonctionnement immédiatement à venir,
c.3) prédiction de la quantité d'air admise (Qpred) pour la phase d'admission d'air du cycle de fonctionnement à venir à partir de la valeur déterminée de la quantité d'air admise (Qₙ) pendant le cycle de fonctionnement courant et la variation (ΔQ) de la quantité d'air d'admission estimée,
d) on applique comme remplissage en air de référence (Qref) pour le calcul de l'avance à l'allumage du cycle de fonctionnement immédiatement à venir cette quantité d'air d'admission prédite (Qpred),
et lorsqu'un régime transitoire n'est pas identifié :
- on applique comme remplissage en air de référence (Qref) pour le calcul de l'avance à l'allumage du cycle de fonctionnement à venir la quantité d'air d'admission admise (Qn) pendant le cycle de fonctionnement courant.

2. Procédé selon la revendication 1, **caractérisé en ce que** l'étape c.2) comprend les étapes de :
c.2.1) détermination (16) d'une quantité d'air admise (Qcor) pendant le cycle de fonctionnement courant corrigée en fonction de paramètres de fonctionnement moteur,
c.2.2) estimation de la variation (ΔQ) de la quantité d'air d'admission entre le cycle de fonctionnement courant et le cycle de fonctionnement à venir à partir de la quantité d'air admise corrigée (Qcor) et du régime moteur (N).

3. Procédé selon la revendication 2, **caractérisé en ce qu'**à l'étape c.2.1) les paramètres de fonctionnement moteur comprennent : la pression atmosphérique, la température d'air d'admission, le rapport de vitesse engagé.

4. Procédé selon l'une des revendications précédentes, **caractérisé en ce que** :
Tant qu'un régime transitoire est identifié :
- on calcule (18) un temps de maintien (tm),
et lorsque le régime transitoire n'est plus identifié :
- on fige le temps de maintien (tm) à sa dernière valeur,
- on applique comme remplissage en air de référence (Qref) pour le calcul de l'avance à l'allumage du cycle de fonctionnement à venir la quantité d'air d'admission estimée (Qpred) durant le temps de maintien figé.

5. Procédé selon la revendication 4, **caractérisé en ce que** le temps de maintien (tm) est déterminé (18) en fonction de la quantité d'air admise (Qn) pendant le cycle de fonctionnement courant et du régime moteur (N).

6. Unité de commande du fonctionnement d'un moteur à allumage commandé, **caractérisé en ce qu'**elle est conçue pour mettre en œuvre le procédé selon l'une quelconque des revendications précédentes.

7. Véhicule automobile comprenant un moteur à allumage commandé, **caractérisé en ce qu'**il comprend une unité de commande du fonctionnement du moteur à allumage commandé selon la revendication 6.

## Patentansprüche

1. Verfahren zur Bestimmung der Referenzluftfüllung zur Berechnung der Zündvorverstellung eines Ottomotors, der nach einem Arbeitszyklus arbeitet, der eine Lufteinlassphase in den Motor umfasst, bei der:
a1) Wir ermitteln (10) die während des aktuellen Betriebszyklus zugeführte Luftmenge (Qₙ) ,
a2) Wir bestimmen (11) die Menge der eingelassenen Luft (Qn_i) während des Betriebszyklus, der dem aktuellen Betriebszyklus vorausgeht.
a3) Wir ermitteln (13) eine Variation der Ansaugluftmenge zwischen zwei Zyklen Betriebszyklen (Qn, Qn-i) des Ottomotors, aus der Differenz der Luftmengen, die dem aktuellen Betriebszyklus und dem Betriebszyklus vor dem aktuellen Betriebszyklus (Qn, On-i) zugeführt werden,
b) ein Übergangszustand des Fremdzündungsmotors wird identifiziert (13), wenn diese Variation der Ansaugluftmenge größer als ein Schwellenwert ist, **dadurch gekennzeichnet, dass**, wenn ein Übergangszustand erkannt wird,
c) eine Ansaugluftmenge (Qpred) wird für die Luftansaugphase des unmittelbar kommenden Betriebszyklus vorhergesagt, wobei dieser Schritt die Schritte umfasst von :
c.1) Bestimmung der während des Zyklus zugeführten Luftmenge (Qn). aktueller Betrieb,
c.2) Abschätzung einer Variation (AQ) der Ansaugluftmenge zwischen dem aktuellen Betriebszyklus und dem unmittelbar bevorstehenden Betriebszyklus,
c.3) Vorhersage der zugeführten Luftmenge (Qpred) für die Luftzufuhrphase des kommenden Betriebszyklus aus dem ermittelten Wert der Luftmenge während des aktuellen Betriebszyklus zugelassenen (Qn) und der Variation (AQ) der geschätzten Ansaugluftmenge,
d) diese vorhergesagte Ansaugluftmenge (Qpred) wird als Referenzluftfüllung (Qref) für die Berechnung des Zündvorlaufs des unmittelbar bevorstehenden Betriebszyklus verwendet, und wenn kein Übergangszustand identifiziert wird:
- die während des aktuellen Betriebszyklus zugelassene Ansaugluftmenge (Qn) wird als Referenzluftfüllung (Qref) für die Berechnung des Zündvorlaufs des kommenden Betriebszyklus verwendet.

2. Verfahren nach Anspruch 1, **dadurch gekennzeichnet, dass** Schritt c.2) umfasst Schritte von:
c.2.1) Bestimmung (16) einer in Abhängigkeit von Motorbetriebsparametern korrigierten Zuluftmenge (Qcor) während des aktuellen Betriebszyklus,
c.2.2) Schätzung der Variation (AQ) der Ansaugluftmenge zwischen den Zyklen korrigierten Zuluftmenge (Qcor) und der Motordrehzahl (N) den aktuellen Betrieb und den bevorstehenden Betriebszyklus .

3. Verfahren nach Anspruch 2, **dadurch gekennzeichnet, dass** in Schritt c.2.1) zu den Motorbetriebsparametern gehören: der Atmosphärendruck, die Ansauglufttemperatur, die eingelegte Gangstufe.

4. Verfahren nach einem der vorhergehenden Ansprüche, **dadurch gekennzeichnet, dass**:
Solange eine Übergangsregelung identifiziert wird:
- wir berechnen (18) eine Haltezeit (tm),
und wenn die Übergangsregelung nicht mehr bekannt ist:
- wir frieren die Haltezeit (tm) auf ihrem letzten Wert ein,
- Wir verwenden als Referenzluftfüllung (Qref) für die Berechnung des Zündvorlaufs des kommenden Betriebszyklus die geschätzte Ansaugluftmenge (Qpred) während der eingefrorenen Haltezeit.

5. Verfahren nach Anspruch 4, **dadurch gekennzeichnet, dass** die Haltezeit (tm) in Abhängigkeit von der während des Reinigungszyklus zugeführten Luftmenge (Qn) bestimmt wird (18).
aktueller Betrieb und Motordrehzahl (N).

6. Einheit zur Steuerung des Betriebs eines Ottomotors, **dadurch gekennzeichnet, dass** sie zur Durchführung des Verfahrens nach einem der vorhergehenden Ansprüche ausgelegt ist.

7. Kraftfahrzeug mit einem Ottomotor, **dadurch gekennzeichnet**
welches eine Einheit zur Steuerung des Betriebs des Ottomotors nach Anspruch 6 umfasst.

## Claims

1. Method for determining the reference air filling for calculating the ignition advance of a spark-ignition engine operating according to an operating cycle comprising an air intake phase into the engine in which:
a1) we determine (10) the quantity of air admitted (Qn) during the current operating cycle ,
a2) we determine (11) the quantity of air admitted (Qn_i) during the operating cycle preceding the current operating cycle,
a3) (13) a variation in the quantity of intake air between two cycles is determined operating cycles (Qn, Qn-i) of the spark-ignition engine, from the difference in the quantities of air admitted to the current operating cycle and to the operating cycle preceding the current operating cycle (Qn, On-i),
b) a transient regime of the spark-ignition engine is identified (13) when this variation in the quantity of intake air is greater than a threshold value, **characterized in that**, when a transient regime is identified,
(c) an intake air quantity (Qpred) is predicted for the air intake phase of the immediately upcoming operating cycle, this step comprising the steps
of :
c.1) determination of the quantity of air admitted (Qn) during the cycle of current operation,
c.2) estimation of a variation (AQ) of the quantity of intake air between the current operating cycle and the immediately upcoming operating cycle,
c.3) prediction of the quantity of air admitted (Qpred) for the air intake phase of the upcoming operating cycle from the determined value of the air quantity admitted (Qn) during the current operating cycle and the variation (AQ) of the estimated intake air quantity,
d) this predicted intake air quantity (Qpred) is applied as the reference air filling (Qref) for the calculation of the ignition advance of the immediately upcoming operating cycle, and when a transient regime is not identified:
- the quantity of intake air admitted (Qn) during the current operating cycle is applied as the reference air filling (Qref) for calculating the ignition advance for the upcoming operating cycle.

2. Method according to claim 1, **characterized in that** step c.2) comprises the steps of:
c.2.1) determination (16) of a quantity of air admitted (Qcor) during the current operating cycle corrected according to engine operating parameters,
c.2.2) estimation of the variation (AQ) of the quantity of intake air between the cycle of current operation and the upcoming operating cycle from the corrected intake air quantity (Qcor) and the engine speed (N).

3. Method according to claim 2, **characterized in that** in step c.2.1) the engine operating parameters include: atmospheric pressure, intake air temperature, gear ratio engaged.

4. Method according to one of the preceding claims, **characterized in that**:
As long as a transient regime is identified:
- we calculate (18) a holding time (tm),
and when the transient regime is no longer identified:
- we freeze the holding time (tm) at its last value,
- the estimated intake air quantity (Qpred) during the frozen holding time is applied as the reference air filling (Qref) for calculating the ignition advance of the upcoming operating cycle.

5. Method according to claim 4, **characterized in that** the holding time (tm) is determined (18) as a function of the quantity of air admitted (Qn) during the cycle of current operation and engine speed (N).

6. Control unit for the operation of a spark-ignition engine, **characterized in that** it is designed to implement the method according to any one of the preceding claims.

7. Motor vehicle comprising a spark-ignition engine, **characterized in that** it comprises a control unit for the operation of the spark-ignition engine according to claim 6.
